**Europäisches Patentamt**

**European Patent Office**

**Office européen des brevets**

(19)

(11) Numéro de publication : **0 465 300 B1**

## FASCICULE DE BREVET EUROPEEN

(12)

(45) Date de publication du fascicule du brevet :
**13.09.95 Bulletin 95/37**

(51) Int. Cl.⁶ : **H04L 5/14, H04L 12/44**

(21) Numéro de dépôt : **91401715.7**

(22) Date de dépôt : **26.06.91**

(54) **Procédé de réglage de niveau d'émission de terminaux dans un réseau de transmission à l'alternat.**

(30) Priorité : **29.06.90 FR 9008211**

(43) Date de publication de la demande :
**08.01.92 Bulletin 92/02**

(45) Mention de la délivrance du brevet :
**13.09.95 Bulletin 95/37**

(84) Etats contractants désignés :
**DE FR GB**

(56) Documents cités :
**EP-A- 0 049 670**
**WO-A-84/04638**
**WO-A-88/09093**
**ELECTRONIC LETTERS vol. 23, no. 19, Novembre 1987, ENAGE, GB pages 1255 - 1257;STERN ET AL.: 'Passive optical local networks for telephony applications and beyond.**

(73) Titulaire : **FRANCE TELECOM Etablissement autonome de droit public, 6, Place d'Alleray F-75015 Paris (FR)**

(72) Inventeur : **Abiven, Jacques Coat-Mael Vieux Marché F-22420 Plouaret (FR)**
Inventeur : **Bourgart, Fabrice Croas An Iviller F-29600 Ploujean (FR)**
Inventeur : **Rahyer, Alain 6, rue Martin Luther King Kerligonan F-22300 Lannion (FR)**

(74) Mandataire : **Martinet & Lapoux BP 405 F-78055 St. Quentin en Yvelines Cédex (FR)**

## Description

La présente invention concerne le réglage de niveau d'émission dans des stations terminales situées aux extrémités d'un réseau de communication à l'alternat dit également semi-duplex, du type notamment arborescent et à fibre optique.

Dans un tel réseau de communication, entre une station centrale faisant office de noeud de commutation et les stations terminales faisant office d'installations d'abonné sont échangées alternativement des trames respectivement suivant les deux sens de transmission.

La constitution de ces trames et particulièrement les problèmes de synchronisation des moyens d'émission dans les stations terminales qui sont situées à des distances différentes de la station centrale, afin d'assigner sans chevauchement des intervalles temporels aux stations terminales dans une trame retour dirigée vers la station centrale, ont été exposés et résolus dans la demande de brevet français FR-A-2636482 déposée le 13 Septembre 1988.

L'exploitation d'un réseau arborescent à l'alternat pose un autre problème relatif à l'adaptation de la puissance de l'émetteur dans chaque station terminale en fonction de la distance de cette station terminale à la station centrale. En effet, les signaux provenant de stations terminales à différentes distances sont reçus avec des niveaux très différents dans le récepteur de la station centrale, en raison des atténuations différentes dues aux diverses longueurs de câble et aux nombres de coupleurs respectivement traversés par les signaux. Si aucune précaution n'est prise, le récepteur doit présenter une dynamique élevée afin de s'adapter à chaque intervalle de temps de la trame retour au niveau d'émission de la station terminale auquel est assigné cet intervalle.

Pour remédier à cette adaptation de niveau d'émission afin que le récepteur de la station centrale reçoive des signaux ayant sensiblement un même niveau, quelles que soient les distances des stations terminales à la station centrale, la WO-A-8809093 divulgue un procédé de réglage de niveau d'émission tel qu'énoncé dans le préambule de la revendication 1. Ce procédé est appliqué dans un réseau duplex ou half-duplex avec multiplexage à division du temps TDM.

A chaque station terminale est attribuée une fente ou canal temporel ayant une largeur d'un bit. En mode à l'alternat (half-duplex), le signal émis par la station terminale est ainsi constitué de bits de données séparés par la période à l'alternat. La comparaison à des seuils n'est alors effectuée que sur un bit isolé. Puisque le niveau d'un bit provenant de la station terminale et reçu par la station centrale dépend des transitions avec les bits adjacents (diagramme de l'oeil) provenant d'autres stations terminales est d'autant plus perturbé que la liaison entre la station terminale et la station centrale est longue et traverse des coupleurs, un niveau échantillonné du bit reçu ne reflète pas exactement le niveau d'émission de la station terminale.

Un objectif de la présente invention est de s'affranchir des imprécisions de mesure de niveau selon la technique antérieure afin de caler rapidement l'émission dans une station terminale à un niveau satisfaisant.

A cette fin, un procédé pour régler le niveau d'émission de stations terminales est tel que défini dans la revendication 1.

Dans chaque station terminale, une modification du niveau d'émission consiste à incrémenter et décrémenter un compte en réponse respectivement à des ordres d'incrémentation et de décrémentation élaborés par la station centrale, à faire correspondre au compte une valeur numérique d'amplitude, et à décrémenter un décompteur de ladite valeur d'amplitude pour définir une durée d'intégration d'un intégrateur fournissant un niveau d'amplitude correspondant à un émetteur du terminal.

Le procédé de réglage de niveau est avantageusement applicable à une transmission à l'alternat, comme défini dans la revendication 5. Le mot de référence d'amplitude est émis dans l'intervalle entre une trame retour et une trame aller, ce qui évite toutes perturbations de celles-ci sur le mot de référence.

Sachant que les circuits pour le traitement des signaux dans les stations centrales et terminales sont sous forme numérique, il apparaît avantageusement que les moyens apportés par la présente invention en ce qui concerne les comparaisons et les élaborations d'ordre dans la station centrale, et les incrémentations et décrémentations analogues à une conversion numérique- analogique dans chaque station terminale, sont également réalisables sous forme de circuits numériques aisément intégrables.

En outre, un changement de mémoire programmable PROM dans les stations terminales permet une adaptabilité des stations terminales aux caractéristiques de transmission du réseau, telles que débit, période d'alternat et trame.

Enfin, l'invention contribue à conserver la qualité de la transmission des signaux dans le réseau, en surveillant préventivement et automatiquement les stations terminales par la station centrale reliée à un centre de maintenance. Les composants notamment les composants électro-optiques pour un réseau à fibre optique, dans les stations terminales sont tributaires des conditions environnantes respectives, tels que température et humidité et ont donc des fonctionnements sujets à variation dans le temps. Périodiquement, le réglage de niveau contrôlé par la station centrale "compensera" le vieillissement des composants.

D'autres avantages et caractéristiques de la présente invention apparaîtront plus clairement à la lecture de la description suivante de plusieurs réalisations préférées de l'invention en référence aux dessins annexés correspondants dans lesquels :

- la Fig. 1 est un schéma de l'architecture d'un réseau de communication optique arborescent à l'alternat pour la mise en oeuvre du procédé de réglage de niveau d'émission selon l'invention ;
- la Fig. 2 est un diagramme temporel montrant la répartition des trames aller et retour dans la station centrale du réseau, par rapport à une période d'alternat ;
- la Fig. 3 montre schématiquement la constitution d'une trame ;
- la Fig. 4 montre schématiquement la constitution d'un champ de gestion en en-tête d'une trame ;
- la Fig. 5 montre l'allure d'un mot de référence d'amplitude transmis par une station terminale lorsqu'il est reçu à la station centrale, ainsi que des signaux logiques utiles à l'analyse du mot de référence d'amplitude ;
- la Fig. 6 est un bloc-diagrammme schématique de la station centrale et d'une station terminale selon l'invention ;
- la Fig. 7 montre en détail un circuit d'analyse de mot de référence d'amplitude et d'élaboration d'ordre de réglage d'amplitude inclus dans la station centrale ; et
- la Fig. 8 montre en détail un circuit de réglage d'amplitude inclus dans une station terminale.

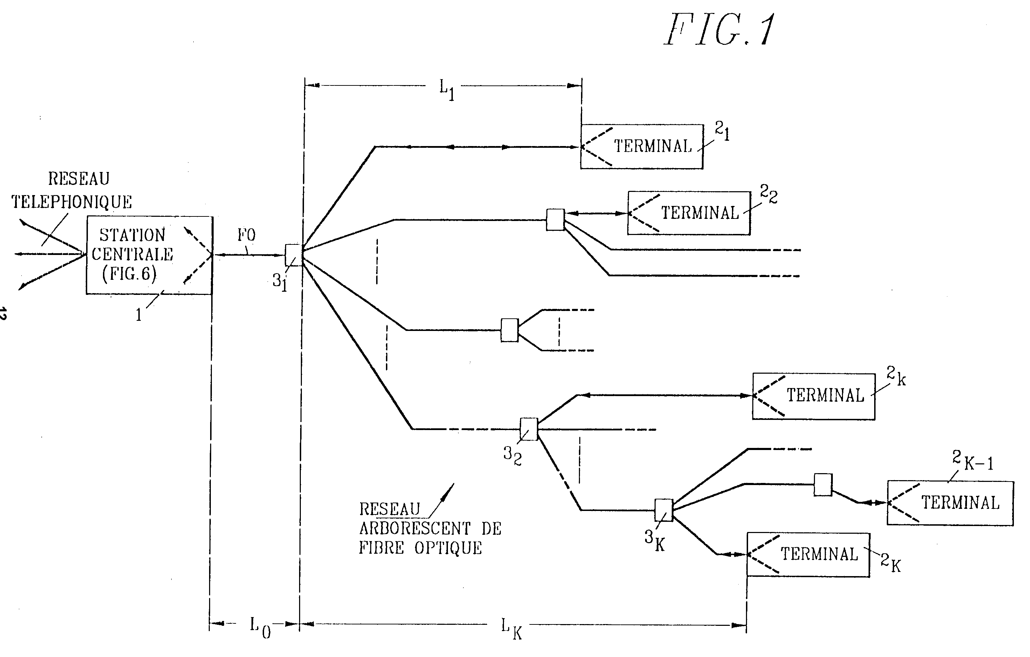

A titre d'exemple préféré, on se réfère dans la suite à un réseau de communication à l'alternat à fibre optique ayant une architecture arborescente, comme montré à la Fig. 1. Ce réseau comprend une station centrale 1 et une pluralité K de stations terminales $2_1$ à $2_K$. La station centrale 1 est un autocommutateur téléphonique desservant plusieurs réseaux tels que celui montré à la Fig. 1, et relié au réseau commuté général téléphonique. Chaque station terminale peut être une installation téléphonique simple, ou une installation téléphonique plus complexe, comprenant un réseau local desservant une pluralité de terminaux spécifiques, tels que poste téléphonique, télécopieur, terminal vidéotex, etc... Les secondes stations $2_1$ à $2_K$ seront désignées dans la suite par terminaux.

Le réseau reliant la station centrale 1 aux terminaux $2_1$ à $2_K$ est composé d'un arbre dont le tronc part de la station centrale et dont les branches sont partagées en deux au niveau de coupleurs bidirectionnels 3 ayant un accès commun orienté vers la station centrale et plusieurs accès secondaires orientés vers des terminaux.

Comme montré schématiquement dans la Fig. 1, les terminaux $2_1$ à $2_K$ sont localisés à des distances différentes par rapport à la station centrale. Dans cette figure, un premier coupleur $3_1$ est localisé à une distance $L_0$ de la station centrale 1 le long d'une fibre optique de tronc d'arbre FO, et est relié via des accès secondaires respectifs notamment au premier terminal $2_1$ par une longueur de fibre optique $L_1$, et au terminal $2_K$ par une longueur de fibre optique $L_K$ à travers au moins deux coupleurs $3_2$ à $3_K$. Les autres accès des coupleurs $3_2$ et $3_K$ desservent d'autres terminaux, en l'occurrence les terminaux $2_K$ à $2_{K-1}$. Ainsi, le terminal $2_1$ est relié à la station centrale par une longueur de fibre optique $L_0 + L_1$ et un seul coupleur $3_1$, tandis que le terminal $2_K$ est relié à la station centrale à travers une longueur de fibre optique $L_0 + L_K$ à travers au moins trois coupleurs $3_1$, $3_2$ et $3_K$. Cette disparité dans les distances entre station centrale et terminaux introduit dans les signaux échangés non seulement des temps de retard de propagation différents mais également des atténuations de signaux différentes. Comme déjà dit, les moyens pour remédier à la disparité dans les retards de propagation n'appartiennent pas au cadre de la présente invention, et le lecteur se reportera à ce sujet à la demande de brevet français FR-A-2636482 déjà citée.

Si on désigne par AC l'atténuation conférée par un coupleur, et AF l'atténuation linéique d'une fibre optique, les signaux échangés entre la station 1 et le terminal $2_1$ subissent une atténuation égale à

$$A_1 = 1 \times AC + (L_0 + L_1) AF,$$

et les signaux échangés entre la station centrale et le terminal $2_K$ subissent l'atténuation suivante :

$$A_K = (3 \text{ ou plus}) \times AC + (L_0 + L_K) AF$$

Si on désigne par NO le niveau d'amplitude nominal pour une réception convenable dans la station centrale 1, il apparaît, selon les localisations respectives des terminaux $2_1$ et $2_K$ selon la Fig. 1, que la puissance du transmetteur du terminal $2_1$, le plus proche de la station 1, doit être inférieure à celle du terminal $2_K$, soit :

$$NO/A_1 < NO/A_K$$

Les échanges de signaux entre la station centrale et les divers terminaux sont transmis en un mode dit à l'alternat collectif et à accès multiples à répartition dans le temps (AMRT). Ce mode de transmission permet un dialogue entre la station centrale et les terminaux à travers un support unique, en l'occurrence une fibre optique, selon les deux sens de transmission. Selon un premier sens de transmission, appelé sens aller, ou parfois sens descendant, de la station centrale 1 vers les terminaux $2_1$ à $2_K$, la station centrale 1 élabore et transmet des signaux à destination respectivement des terminaux sous la forme de trame aller T12. Suivant un second sens de transmission opposé au premier sens de transmission, appelé sens retour ou parfois sens

montant, des terminaux $2_1$ à $2_K$ vers la station centrale 1, chacun des terminaux transmet des signaux à l'intention de la station centrale en les insérant dans des intervalles temporels bien déterminés respectifs de trames retour T21.

Par exemple, en se référant à la Fig. 2, si la fréquence à l'alternat est égale à 2 kHz, soit une période d'alternat TA = 500 μs, il faut que chaque trame T12, T21 ait une longueur inférieure à 250 μs pour tenir compte du temps de propagation aller/retour maximal entre la station 1 et le terminal le plus éloigné, soit un temps TP qui inclut également un temps de garde nécessaire au basculement du mode transmission au mode réception dans chacune des stations, station centrale et terminal. Par exemple, si on considère que la transmission de l'information s'effectue au débit réel de 4,096 Mbit/s, soit un temps bit egal à 0,244 μs, une trame T12, T21 comportant 800 bits et donc ayant une durée de 195,3 μs confère un temps maximal TP = 109,4 μs, temps plus que nécessaire pour échanger des signaux avec un terminal à une distance de quelques kilomètres de la station centrale, à travers quelques coupleurs.

Comme montré en détail à la Fig. 3, particulièrement pour la trame aller T12, une trame est composée d'un champ de gestion GES et de K secteurs réservés aux terminaux d'abonné. Selon l'exemple précédent, le champ de gestion comprend 32 bits, et K = 8 secteurs d'abonné ayant chacun 96 bits, soit 800 bits par trame.

Un secteur de rang donné n'est pas assigné une fois pour toutes à un terminal, mais est dédié à un terminal en fonction des disponibilités des autres secteurs. Par exemple, lors d'une demande de communication, le secteur IT2 de rang 2 peut être affecté au terminal $2_{K-1}$ de rang K-1. Cette attribution d'intervalles temporels multiplexés $IT_1$ à $IT_K$ formant les secteurs est déterminée par la station centrale 1 en fonction de la distance entre cette station et le terminal demandeur, selon un procédé analogue à celui décrit dans la demande de brevet français précitée. Chaque secteur est destiné à convoyer de l'information proprement dite entre le terminal demandeur et un autre terminal éloigné à travers la station centrale 1.

Le champ de gestion GES est composé d'un mot de verrouillage de trame MVT, d'une adresse de terminal, appelé jeton J, d'un mot de commande MC, d'information de commande IC, et d'autres bits de gestion n'appartenant pas au cadre de la présente invention et désignés par AG.

Le mot de verrouillage de trame MVT est destiné, d'une manière classique, à synchroniser les bases de temps incluses dans les terminaux d'abonné $2_1$ à $2_K$, jouant le rôle d'esclave, sur l'horloge incluse dans la station centrale 1, jouant le rôle de station maître. Notamment à partir de la détection de ce mot de verrouillage de trame, chaque terminal récupère l'horloge bit HB, ici égale à 4,096 MHz.

Le jeton J est constitué par le numéro 1 à K du terminal $2_1$ à $2_K$ auxquels sont destinées les informations MC et IC qui suivent dans le champ de gestion. Lorsque K = 8, le jeton J est constitué par un mot à 3 bits. Pour éviter toute erreur, c'est-à-dire notamment pour éviter qu'un terminal déjà synchronisé ne réponde pas à la station centrale suite à une erreur dans la transmission du jeton, un terminal d'abonné doit détecter son numéro en tant que jeton dans deux trames aller successives pour en déduire que les informations MC et IC particulièrement pour une transmission du mot MVT le concernent.

Le champ MC est constitué par différents ordres de commande codés selon un protocole d'échange entre la station centrale et les terminaux. Ces ordres peuvent concerner la mise en service d'un terminal, c'est-à-dire d'une part l'attribution à ce terminal d'un secteur disponible $IT_1$ à $IT_K$, et d'autre part une procédure pour le réglage progressif du niveau d'amplitude du transmetteur du terminal, comme on le verra dans la suite. Les ordres de commande peuvent également concerner des surveillances périodiques des terminaux, en vue de régler leur niveau d'amplitude de transmission en fonction du vieillissement des composants internes aux terminaux, et, bien entendu, peuvent concerner toutes demandes de communication d'arrivée ou de départ entre la station centrale et chaque terminal, et donc l'affectation d'un secteur d'information $IT_1$ à $IT_K$ dédié à ce terminal.

Le champ IC contient des valeurs associées aux ordres de commande incluses dans le champ MC, par exemple une valeur numérique associée à une sommation ordonnée par un mot codé inclus dans le champ MC. Ces informations complémentaires de gestion servent à de nombreuses fonctions, et sont toutes exprimées sous forme numérique.

Dans le sens retour, dit également montant, la trame T21 a une structure analogue à la trame T12, et comprend un champ de gestion ainsi que K secteurs attribués aux terminaux. Pour une même communication relative à un terminal, les deux secteurs qui lui sont attribués ont un même rang dans les trames T12 et T21. Le champ de gestion dans la trame retour ne comprend pas de mot de verrouillage, et l'ensemble des champs J, MC et IC relatifs à un terminal en cours d'échange protocolaire avec la station centrale a une position variable dans le champ GES, qui dépend de la distance de ce terminal à la station centrale.

Lorsqu'un terminal est en phase de réglage du niveau d'amplitude de son transmetteur, le champ IC est composé d'un mot de référence d'amplitude MRA constitué par un nombre déterminé N de bits à l'état "1" qui constitue une information analogique permettant à la station centrale d'en déduire le niveau de puissance auquel est réglé le circuit d'émission du terminal, en comparant l'amplitude de chaque bit à l'état "1" du mot MRA reçu à des seuils prédéterminés NF, NI, NS. L'absence de confusion sur la provenance du mot de référence d'amplitude MRA dans la station centrale résulte de l'introduction du mot MRA dans le champ de gestion GES de la trame retour T21 dès la fin de la réception de la trame aller T12 par le terminal en question.

Ainsi, lorsque le terminal a détecté son numéro en tant que jeton J dans une trame T12, puis dans le champ suivant MC une commande de transmission du mot MRA, soit à un temps $t_D$, le terminal attend au cours d'une seconde phase jusqu'à un temps $t_A$ correspondant à la réception du reste de la trame aller T12 au niveau de ce terminal, pour transmettre le mot MRA avec un niveau initial INI vers la station centrale 1. Pendant le temps de propagation TP, la station centrale ne reçoit et n'identifie qu'un seul mot MRA provenant du terminal en cours de réglage d'amplitude. Bien entendu, ceci suppose que les autres terminaux en service sont déjà calés temporellement.

Après analyse de l'amplitude des bits "1" du mot MRA reçu, la station centrale envoie, toujours avec l'adresse J du terminal, un ordre de modification du niveau de transmission (MC+IC[UD]) au terminal en question. Puis à une quatrième phase, le terminal retransmet le mot de référence d'amplitude MRA ayant une nouvelle amplitude modifiée selon les commandes ordonnées par la station centrale.

Des cycles comprenant la dernière phase de transmission aller et la dernière phase de transmission retour sont itérés jusqu'au réglage effectif de l'amplitude du transmetteur du terminal au niveau nominal NO reçu dans la station 1. Le nombre de cycles de réglage est compté dans la station centrale, et si celui-ci dépasse un nombre prédéterminé, le terminal est déclaré "en panne".

En dehors de la période de mise en service des terminaux d'abonné et de leur remise en service en cas de panne majeure où le niveau initial d'amplitude des signaux à transmettre est sensiblement égal à un niveau minimal MIN bien inférieur au niveau nominal requis NO, la station centrale effectue cycliquement un balayage des terminaux afin de régler périodiquement le niveau d'amplitude de transmission des terminaux, qui varie en fonction du vieillissement et des dérives thermiques des composants inclus dans chaque terminal, et d'une manière générale de l'environnement du terminal.

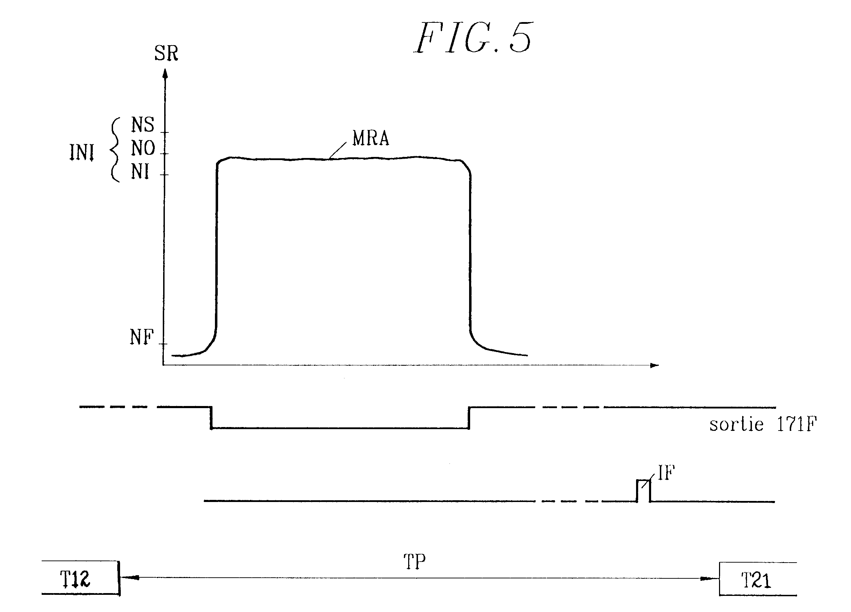

Le principe du réglage du niveau d'amplitude dans un terminal est le suivant, en référence à la Fig. 5.

Le niveau d'amplitude détecté sur le mot de référence d'amplitude MRA est jugé correct dans la station centrale 1, si celui-ci est compris entre un niveau supérieur NS et un niveau inférieur NI tels que (NS+NI)/2 = NO et avec de préférence, NI = 0,9 NO et NS = 1,1 NO. En dehors de l'intervalle NS, NI, le niveau d'amplitude est jugé insatisfaisant, et il est nécessaire de l'incrémenter lorsque le niveau est inférieur à NI et de le décrémenter lorsque le niveau est supérieur à NS. Afin d'accélérer la procédure de réglage, un troisième niveau est défini comme nettement inférieur au niveau nominal NO, ce troisième niveau NF étant typiquement égal à 0,1 NO. Lorsque le niveau du signal reçu est supérieur à NF, l'incrémentation ou décrémentation se fait pas à pas, un pas étant par exemple égal à 0,01 NO. Lorsque le niveau reçu est inférieur à NF, l'incrémentation s'effectuera par des sauts de 8 pas entre deux cycles de réglage.

Le niveau initial INI des signaux transmis par un terminal à raccorder au réseau arborescent est typiquement compris entre NI et NF, si bien que pour un terminal à raccorder à proximité de la station centrale, le réglage s'effectue très rapidement, tandis que pour un terminal à raccorder à une distance relativement grande de la station centrale, le réglage s'effectue en plusieurs cycles.

On décrit maintenant les divers moyens dans la station centrale 1 et dans un terminal quelconque, désigné par le repère 2, ayant trait particulièrement à l'analyse du niveau d'amplitude et à la transmission du résultat de cette analyse dans la station centrale, d'une part, et à la réception du résultat de cette analyse dans le terminal et au réglage de l'amplitude correspondant, d'autre part.

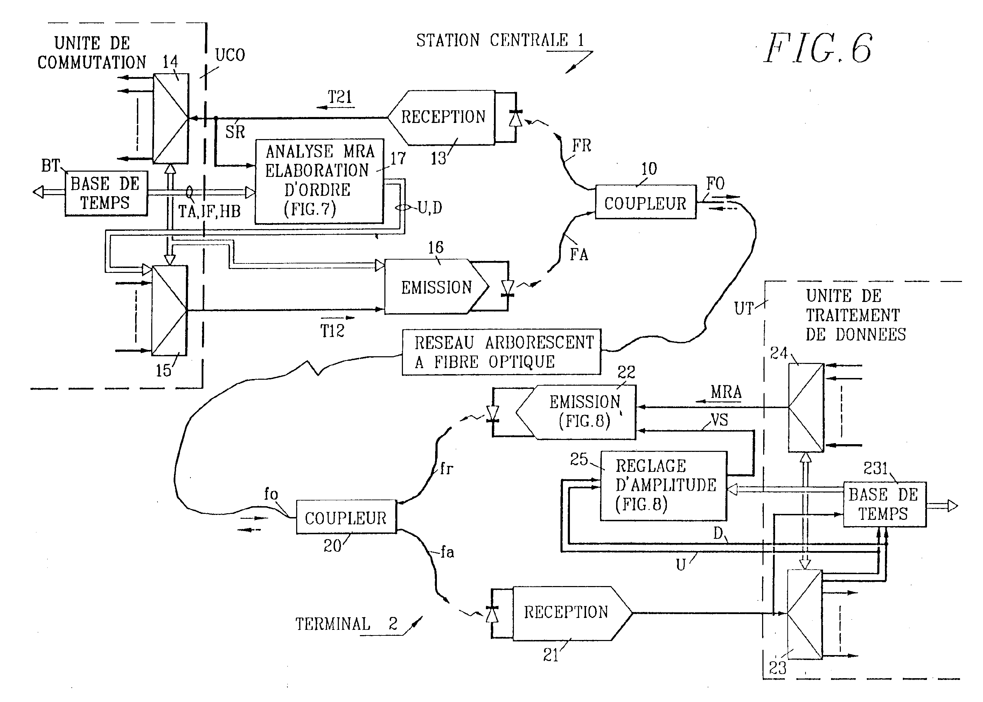

Comme montré schématiquement à la Fig. 6, la station centrale 1 comprend classiquement, du côté du réseau arborescent, un coupleur optique à trois accès, couplant une fibre optique de terminaison FO du tronc d'arbre du réseau à un photorécepteur, du genre photodiode PIN, et à un photo-émetteur du genre diode LED, ou diode laser, à travers de courtes fibres optiques intermédiaires FR et FA. La diode PIN est connectée à un circuit de réception et d'amplification 13 transmettant les trames retour T21 à un circuit de démultiplexage 14 inclus dans une unité de commutation de canaux temporels UCO de la station centrale 1. Dans le sens aller, l'unité de commutation UCO comprend en sortie un circuit de multiplexage 15 pour former périodiquement les trames aller T12, et en particulier pour paquetiser les données proprement dites destinées respectivement aux terminaux sous forme de secteurs à 96 bits, et pour introduire des informations dans le champ de gestion GES. Les trames T12 sont transmises en série à un circuit d'émission 16 relatif à l'amplification et la polarisation de la diode LED. En outre, selon l'invention, la station centrale 1 comprend un circuit d'analyse du mot MRA et d'élaboration d'ordre de réglage d'amplitude UD, 17.

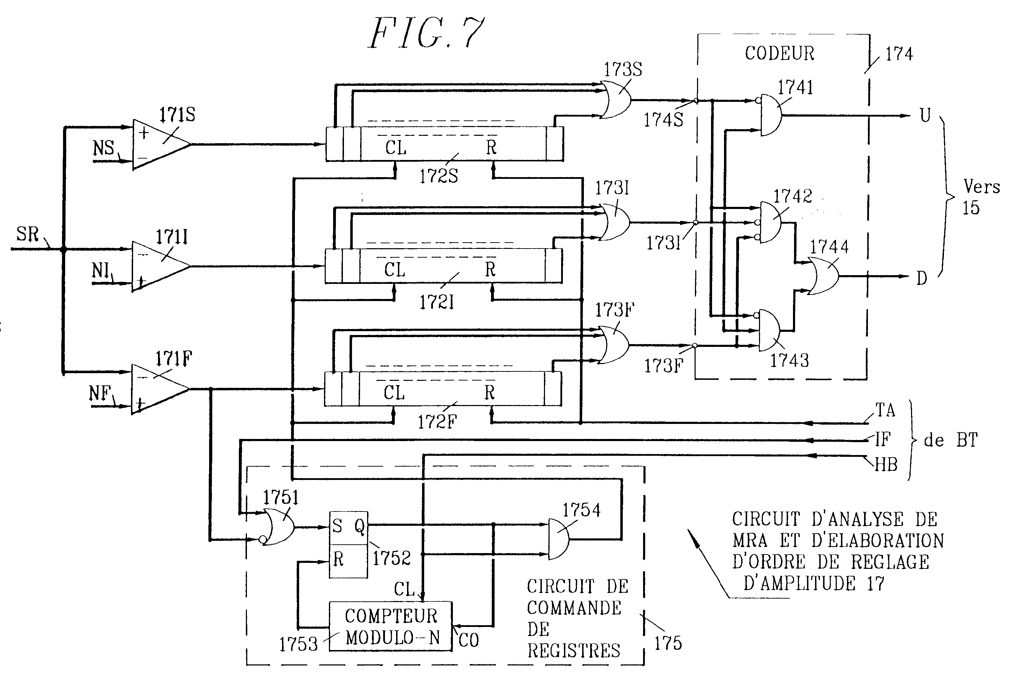

En se reportant à la Fig. 7, le circuit 17 comprend trois comparateurs de tension 171S, 171I et 171F, trois registres à décalage 172S, 172I et 172F, trois portes OU 173S, 173I et 173F, un codeur logique 174 et un circuit de commande de registres 175.

Les comparateurs 171S, 171I et 171F reçoivent respectivement à des premières entrées inverse, directe et directe les niveaux de tension de référence NS, NI et NF. Des secondes entrées respectivement directe, inverse et inverse des comparateurs 171S, 171I et 171F reçoivent le signal SR récupéré par le circuit de réception 13 et convoyant les trames retour T21. Un signal logique à la sortie de l'un de ces trois comparateurs est à l'état "1" lorsque la tension à l'entrée directe (+) du comparateur est supérieure à la tension à l'entrée inverse (-) de ce même comparateur.

Les sorties des trois comparateurs 171S, 171I et 171F sont reliées respectivement aux entrées des registres à décalage 172S, 172I et 172F ayant chacun un nombre d'étages à un bit égal à N-1. Les portes OU 173S, 173I et 173F ont N-1 entrées respectivement reliées aux sorties des registres 172S, 172I et 172F et des sorties reliées à des entrées respectives 174S, 174I et 174F du codeur 174.

Lorsque le niveau du signal reçu SR est compris entre les niveaux inférieur NI et supérieur NS pendant N-1 temps bits consécutifs, la sortie des trois portes OU 173S, 173I et 173F est à l'état "0", et deux sorties U et D du codeur 174 sont également à l'état "0". Comme cela apparaît dans le tableau ci-après résumant le codage des résultats des comparaisons dans les trois comparateurs, le niveau "analogique" du signal SR peut être compris seulement dans quatre plages de tension prédéterminées si bien que le résultat des comparaisons n'est codé que sur deux bits U et D.

| Sortie des portes OU | | | Codage | | Amplitude d'émission terminal |
|---|---|---|---|---|---|
| 173F | 173I | 173S | U | D | |
| NI<SR<NS | | | | | |
| 0 | 0 | 0 | 0 | 0 | correcte |
| NS<SR 0 | 0 | 1 | 0 | 1 | à décrémenter |
| NF<SR<NI 0 | 1 | 0 | 1 | 0 | à incrémenter |
| impossible 0 | 1 | 1 | | | |
| inadmissible 1 | 0 | 0 | | | |
| inadmissible 1 | 0 | 1 | | | |
| SR<NF 1 | 1 | 0 | 1 | 1 | à incrémenter fortement |
| impossible 1 | 1 | 1 | | | |

Le circuit de commande de registre 175 détecte le début d'un mot de référence d'amplitude MRA afin que les niveaux des bits de ce mot soient successivement quantifiés et enregistrés dans les registres à décalage. Le circuit 175 comprend essentiellement une porte OU à deux entrées 1751, une bascule RS 1752, un compteur modulo N 1753 et une porte ET à deux entrées 1754. Une entrée inverse de la porte 1751 est reliée à la sortie du troisième comparateur 171F, tandis qu'une entrée directe de la porte 1751 reçoit une impulsion de fin de temps de propagation IF, précédant sensiblement le début de la trame retour T21 et produite par une base de temps BT dans l'unité de commutation UCO. La bascule 1752 a une entrée de mise à "1" S reliée à la sortie de la porte 1751, une sortie Q reliée à une entrée de la porte 1754 et à une entrée de comptage CO du compteur 1753, et une entrée de mise à "0" R reliée à une sortie du compteur 1753. La seconde entrée de la porte 1754 et une entrée d'horloge CL du compteur 1753 reçoivent le signal d'horloge HB à la fréquence de 4,096 Mbit/s de la base de temps BT. La sortie de la porte 1754 est reliée aux entrées d'horloge CL des trois registres à décalage 172S, 172I, 172F.

Les registres à décalage sont remis à zéro par leur entrée R en réponse au front montant du signal d'horloge à l'alternat de période TA (Fig. 2), précédant la réception d'une trame retour T21. Comme montré à la Fig. 5, dès que le niveau du signal reçu SR franchit le seuil de niveau faible NF, la sortie de la porte 1751 passe à l'état "1" ce qui déclenche le comptage d'impulsions d'horloge dans le compteur 1753 et "l'échantillonnage" des sorties des comparateurs et donc le décalage des différents échantillons obtenus dans les registres à décalage, à la fréquence d'horloge HB. Les opérations précédentes sont arrêtées dés que le compteur 1753 a compté N impulsions d'horloge, ce qui remet à zéro la bascule 1752, et par suite ferme la porte ET 1754. Si tous les bits dans les trois registres 172S, 173I et 172F sont à "0" pendant le comptage précédent, le niveau des bits "1" du mot de référence d'amplitude MRA est compris entre NI et NS et est donc correct. Si au moins l'un des, ou plusieurs des étages du registre 172S, respectivement du registre 172I, sont à l'état "1", le niveau du signal reçu SR est trop élevé et il faut par conséquent diminuer l'amplitude du signal émis dans le terminal 2, respectivement est trop faible et il faut augmenter l'amplitude du signal émis dans le terminal 2. Si à la fois au moins des étages de même rang dans les registres 172F et 172I sont à l'état "1", le niveau du signal reçu SR est beaucoup trop faible, puisqu'il est inférieur au niveau NF, et l'amplitude du signal émis dans le terminal 2 doit être augmentée très rapidement, par exemple avec 8 pas chaque fois, jusqu'à atteindre un niveau correspondant à un niveau de réception dans la station 1 supérieur à NF.

Si pendant la fenêtre de largeur TP entre la fin d'émission d'une trame aller T12 et le début de réception d'une trame retour T21, le niveau du signal reçu SR n'atteint pas le niveau faible NF, c'est-à-dire si la sortie du comparateur 171F reste à l'état "1", cette sortie n'autorisera pas le déclenchement du comptage dans le compteur 1753. Dans ce cas, l'impulsion IF à la fin de la fenêtre TP au cours de laquelle normalement le mot MRA doit être reçu, met elle-même à "1" la bascule 1752, et par conséquent autorise par défaut le comptage de N impulsions d'horloge par le compteur 1753 ainsi que les décalages dans les registres 172S, 172I et 172F. A la fin de ce dernier comptage, les sorties des portes 173S, 173I et 173F sont respectivement à l'état "0", "1" et "1" ce qui correspond à un codage "11" aux sorties U et D du codeur 174.

Il est à noter que pour un mot MRA ayant N bits, le nombre d'étages dans le registre à décalage peut être choisi inférieur à N par exemple N-2, N-3, etc... Le nombre d'étages dans ces registres est choisi d'autant plus grand que la détection du mot MRA est précise. Le nombre N-1 d'étages par registre est choisi de préférence pour que l'échantillonnage des résultats des comparaisons tienne compte de la pente du front montant du premier bit du mot reçu MRA et du temps de réponse des comparateurs.

Comme montré également à la Fig. 7, le codeur 174 comprend par exemple une porte ET 1741 à deux entrées, deux portes ET à trois entrées 1742 et 1743 et une porte OU à deux entrées 1744 afin que les sorties U et D des portes 1741 et 1744 soient aux états respectifs selon le tableau précédent. La sortie de la porte OU 173S en sortie du registre 172S est reliée à une entrée inverse de la porte 1741, à une entrée directe de la porte 1742 et à une première entrée inverse de la porte 1743. La sortie de la porte OU 173I en sortie du registre à décalage 172I est reliée à une entrée directe de la porte 1741, à une première entrée inverse de la porte 1742 et à une première entrée directe de la porte 1743. La sortie de la porte OU 173F en sortie du registre à décalage 172F est reliée à une seconde entrée inverse de la porte 1742 et à une seconde entrée directe de la porte 1743. Les sorties des portes 1742 et 1743 sont reliées aux entrées respectives de la porte OU 1744.

Les deux bits U et D sont alors mémorisés dans une mémoire tampon inclus dans le circuit de multiplexage 15, et sont insérés dans le champ d'informations de commande IC d'une trame aller T12, à la suite d'un mot de commande MC invitant à un réglage d'amplitude le terminal en question 2 dont l'adresse est contenue dans le jeton J de la trame T12.

En se reportant maintenant à la Fig. 6, un terminal 2 comprend, du côté du réseau arborescent, un coupleur optique à trois accès 20 couplant une fibre optique respective fo du réseau arborescent à un circuit de réception 21 à diode PIN et à un circuit d'émission 22 à diode LED à travers deux fibres optiques intermédiaires fa et fr. Le terminal comprend, en outre, une unité de traitement de données UT dans laquelle un circuit de démultiplexage 23 est relié à la sortie du circuit réception 21, et un circuit de multiplexage 24 dessert l'entrée du circuit d'émission 22. Selon l'invention, il est également prévu un circuit intermédiaire entre les moyens de réception 21-23 et les moyens d'émission 24-22 dit circuit de réglage d'amplitude 25.

Le circuit de démultiplexage 23 est associé à une base de temps 231 qui récupère les fréquences de trame et de bit à partir du mot de verrouillage de trame MVT contenu en en-tête des trames aller T12, et des moyens pour détecter dans le champ de gestion GES, le numéro du terminal en tant que jeton J. En outre, lorsque le circuit de démultiplexage 23 reconnaît un mot de réglage d'amplitude dans le champ MC, les deux bits U et D contenus dans le champ IC sont appliqués aux entrées du circuit de réglage d'amplitude 25. Le circuit de multiplexage fournit également aux circuits internes du terminal, les données proprement dites attribuées à celui-ci et insérées dans le secteur IT dédié au terminal.

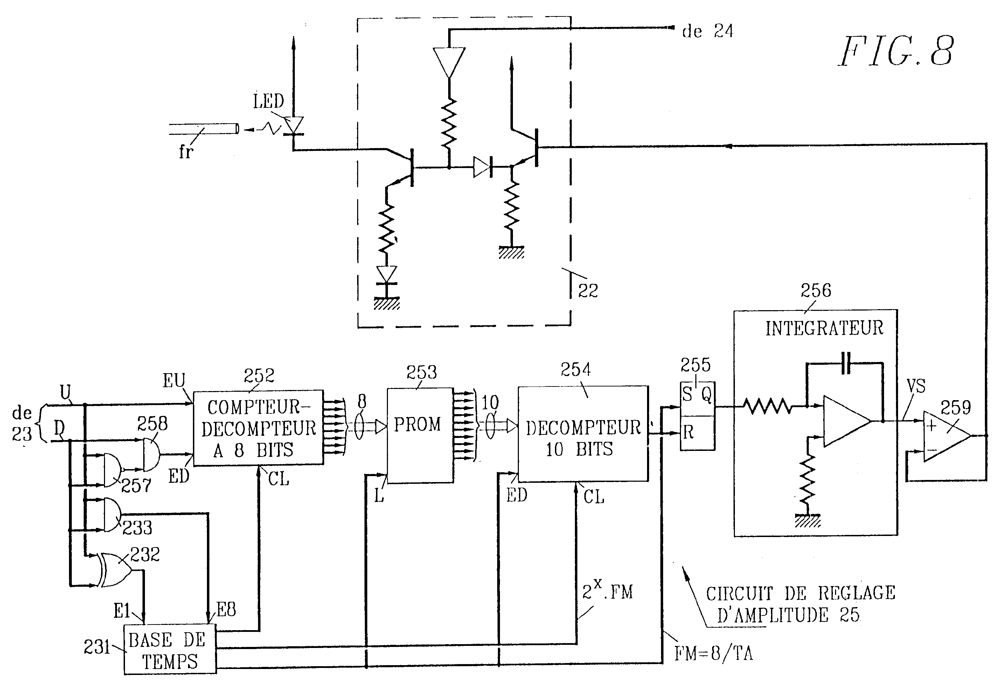

Comme montré en détail à la Fig. 8, le circuit de réglage d'amplitude 25 comprend essentiellement un compteur-décompteur à 8 bits 252, une mémoire enfichable PROM de linéarisation 253, un décompteur à 10 bits 254, une bascule RS 255 et un intégrateur 256. Les tailles du compteur-décompteur, de la mémoire PROM et du décompteur sont données uniquement à titre d'exemple.

Une entrée d'autorisation de comptage EU du compteur 252 reçoit directement le bit U, tandis qu'une entrée de décomptage ED du compteur-décompteur 252 reçoit le bit D à travers une porte NON-ET 257 et une porte ET 258. Les deux entrées de la porte 257 reçoivent les bits U et D. Une entrée de la porte 258 reçoit le bit D tandis que l'autre entrée de cette porte est reliée à la sortie de la porte 257. Dans ces conditions, le compteur-décompteur 252 passe en état de comptage lorsque le niveau de signal reçu SR dans la station centrale 1 est inférieur au niveau NI, soit un mot UD = "10" ou "11", et le compteur-décompteur 252 passe en état de décomptage uniquement lorsque le niveau du signal reçu dans la station centrale est supérieur à NS ce qui correspond à un mot UD = "01". Lorsque l'amplitude du signal reçu SR dans la station centrale 1 est correcte, les entrées EU et UD sont à l'état "0", et le compte du compteur-décompteur 252 n'est pas modifié.

D'autre part, les bits U et D délivrés par le circuit de démultiplexage 23 sont également combinés à des entrées E1 et E8 de la base de temps 231 à travers une porte OU-Exclusif 232 et une autre porte ET à deux entrées 233. Lorsque la sortie de la porte 232 reliée à l'entrée E1 est à l'état "1", la base de temps 231 n'applique qu'une impulsion d'horloge à une entrée d'horloge CL du compteur-décompteur 252 de manière à augmenter ou à diminuer d'un pas égal typiquement à (0,01 NO), l'amplitude du signal à émettre par le terminal. Lorsque la sortie de la porte ET 233 reliée à l'entrée E8 est à l'état "1", la base de temps 231 applique brièvement un nombre déterminé d'impulsions d'horloge, par exemple huit, à l'entrée d'horloge CL du compteur-décompteur 252 afin que l'amplitude du signal à émettre par le circuit 22 soit augmentée rapidement.

La mémoire morte programmable 253 est adressée en lecture par des adresses à 8 bits fournit par le compteur-décompteur 252, et fait correspondre à chaque adresse, la valeur numérique d'une amplitude. Ainsi la mémoire 253 réalise la conversion "numérique-analogique" entre une amplitude codée et la valeur réelle de l'amplitude. Initialement, lors de la mise en marche du terminal 2, le compteur 252 est à zéro, ce qui correspond, comme déjà dit, à une amplitude minimum initiale MIN comprise sensiblement entre les niveaux NS et NI.

L'entrée de commande de lecture L de la mémoire 253, l'entrée de décomptage ED du décompteur 254 ainsi que l'entrée de mise à un S de la bascule 255 reçoivent des impulsions d'horloge à une fréquence FM multiple de la fréquence d'alternat, typiquement à une fréquence égale à 8 x 2 = 16 kHz. Ainsi en réponse à une impulsion d'horloge, la valeur numérique d'amplitude est lue dans la mémoire 253, sous la forme d'un mot de 10 bits qui est chargé dans le décompteur 254, et la sortie Q de la bascule 255 reliée à l'entrée de l'intégrateur 256 est mise à "1". Le décompteur 254 reçoit des impulsions d'horloge à la fréquence $2^x$ FM où x est égal typiquement à 10. La sortie de retenue B du décompteur 254 est reliée à l'entrée R de la bascule 255.

Ainsi, dès que le décompteur 254 a décompté un nombre d'impulsions d'horloge à la fréquence $(2^x.FM)$ égal à la valeur numérique de l'amplitude lue dans la mémoire 253, la bascule 25 est mise à zéro. L'intégrateur 256 réalise ainsi la conversion de la valeur numérique de l'amplitude en une tension analogique. Cette tension analogique VS est appliquée au circuit d'émission 22 à travers un amplificateur-suiveur 259. Une entrée de modulation du circuit d'émission 22 reçoit les signaux numériques à transmettre à la station centrale 1, établis par le circuit de multiplexage 24.

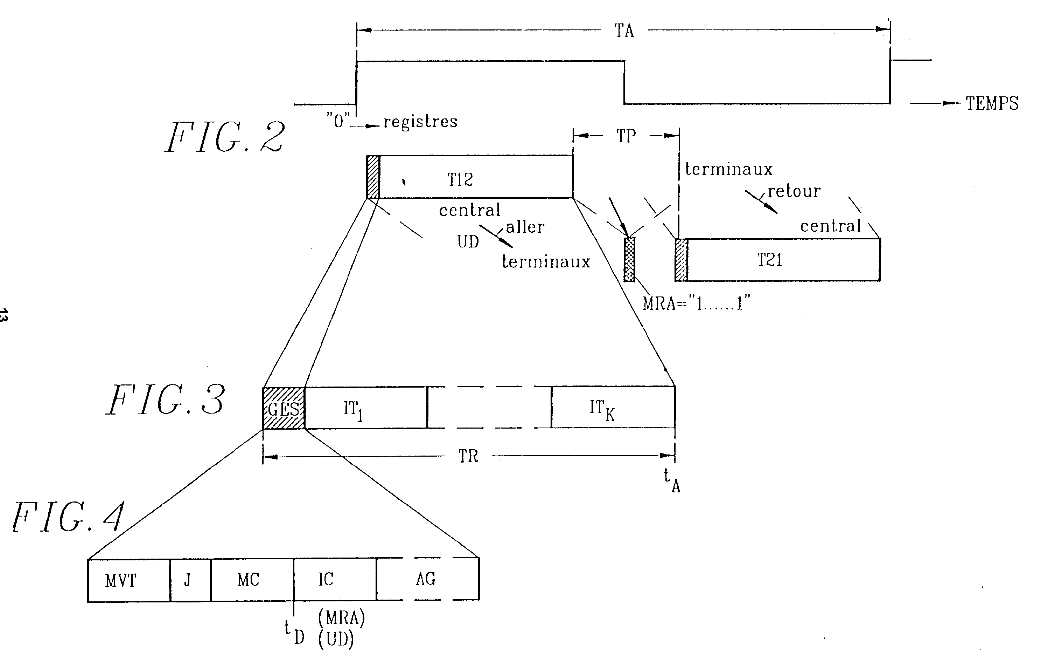

Pour assurer la stabilité de la tension VS, les valeurs de résistance et de capacité dans l'intégrateur 256 sont convenablement dimensionnées. Toutefois, la constante d'intégration de l'intégrateur est compatible avec le débit des signaux échangés entre la station 1 et le terminal 2. C'est pourquoi, en pratique, pour une période d'alternat égale à 2 kHz, il a été choisi de stabiliser chaque valeur VS à raison de (FM.TA)=8 cycles d'intégration par période d'alternat. En fait, sachant que les bits U et D sont détectés et donc disponibles au début de la trame aller T12, après détection du mot IC, et que le nouveau réglage de l'amplitude d'émission est effectif à la fin de cette trame, après environ 190 µs succèdant à la détection du mot IC, deux à trois cycles effectifs de décomptage dans le décompteur 254 sont pris en compte pour modifier rapidement l'amplitude du signal d'émission. Le nombre de 2 à 3 cycles est fonction du produit TRxFM, c'est-à-dire du nombre d'impulsions FM pendant la durée de trame TR, ou plus précisément $t_A-t_D$, selon les Figs. 3 et 4. Ainsi, après le réglage d'amplitude d'émission dans le circuit 22, un mot MRA="11...1" peut être produit par le démultiplexeur 24 sous la commande de la base de temps 231, au début de la fenêtre TP, après réception de la trame T12.

**Revendications**

1. Procédé pour régler le niveau d'émission de stations terminales (2) situées à des distances différentes d'une station centrale (1) à travers un réseau de communication, comprenant le cycle d'étapes suivantes :
   - comparaison du niveau reçu d'un signal émis par une station terminale à des seuils prédéterminés dans la station centrale (1), et si le résultat de la comparaison n'est pas satisfaisant, effectuer les deux étapes suivantes :
     - émission de l'adresse de la station terminale (J) avec un ordre de modification de niveau d'émission de la station terminale (MC+IC[UD]) depuis la station centrale (1), et
     - en réponse à l'adresse (J) par la station terminale correspondante (2), émission d'un signal émis avec un niveau d'émission modifié selon ledit ordre de modification depuis la station terminale,

caractérisé en ce que

le signal émis par la station terminale (Z) dont le niveau reçu est comparé à des seuils est un mot de référence d'amplitude (MRA) ayant des bits "1" émis à un niveau initial (INI) au début des cycles, et chaque comparaison consiste

- à comparer le niveau de chaque bits à l'état logique "1" du mot de référence d'amplitude (MRA) reçu dans la station centrale (1) avec des seuils prédéterminés inférieur et supérieur (NI et NS),
- à déclarer la comparaison satisfaisante si un nombre prédéterminé (N-1) de bits "1" ont des niveaux compris entre lesdits deux seuils prédéterminés,
- à élaborer un premier ordre d'incrémentation (UD="10") du niveau d'émission de la station terminale (2) lorsque l'un des bits "1" du mot de référence (MRA) est plus petit que ledit niveau inférieur (NI), et
- à élaborer un ordre de décrémentation (UD="O1") du niveau d'émission de la station terminale lorsque l'un des bits "1" du mot de référence (MRA) est plus grand que ledit niveau supérieur (NS).

2.  Procédé conforme à la revendication 1, caractérisé en ce que chaque comparaison consiste, en outre, à élaborer un second ordre d'incrémentation (UD="11") du niveau d'émission du terminal (2) lorsque l'un des bits "1" du mot de référence (MRA) est plus petit qu'un troisième niveau (NF) lui-même nettement plus petit que ledit niveau inférieur (NI), le second ordre d'incrémentation correspondant à une augmentation du niveau d'émission de la station terminale nettement plus grande que le premier ordre d'incrémentation.

3.  Procédé conforme à l'une quelconque des revendications 1 et 2, caractérisé en ce que la modification du niveau d'émission dans la station terminale (2) consiste à incrémenter et décrémenter un compte (252) en réponse respectivement à des ordres d'incrémentation et de décrémentation élaborés par la station centrale (1), à faire correspondre au compte (252) une valeur numérique d'amplitude (253, PROM), et à décrémenter un décompteur (254) de ladite valeur d'amplitude pour définir une durée d'intégration d'un intégrateur fournissant un niveau d'amplitude correspondant à un émetteur (22) du terminal.

4.  Procédé conforme aux revendications 2 et 3, caractérisé en ce que le compte augmente en réponse à un second ordre d'incrémentation, d'une valeur nettement plus grande qu'en réponse à un premier ordre d'incrémentation.

5.  Procédé conforme à l'une quelconque des revendications 1 à 4 selon lequel le réseau de communication fonctionne à l'alternat,

à chaque période d'alternat (TA) est transmise une trame numérique aller (T12) de la station centrale (1) vers les stations terminales (2), puis une trame retour (T21) des stations terminales vers la station centrale, la réception du début d'une trame retour (T21) par la station centrale (1) succédant à l'émission de la fin d'une trame aller après un temps de propagation prédéterminée (TP),

l'adresse de la station terminale (J) avec une commande de transmission (MC) relatif au mot de référence d'amplitude (MRA) ou un ordre de modification de niveau d'émission de la station terminale (MC+IC[UD]) est située en en-tête (GS) d'une trame aller, et

le mot de référence d'amplitude (MRA) est émis juste après la réception de la fin de trame aller (T12) par la station terminale.

6.  Procédé conforme à la revendication 5 lorsqu'elle dépend de la revendication 3 ou 4, caractérisé en ce que ledit décompteur (254) est décrémenté plusieurs fois successivement entre la réception d'un ordre de modification de niveau d'émission (MC+IC[UD]), et la fin de réception d'une trame aller (T12), dans la station terminale (2).


**Patentansprüche**

1.  Verfahren zur Regelung der Sendeleistung von Endstationen (2) die in einem Verbindungsnetzwerk von einer Zentralstation (1) verschiedentlich entfernt liegen, enthaltend den Zyklus von folgenden Schritten:

- Vergleich der erhaltenen Leistung eines von einer Endstation gesendeten Signals mit vorgegebenen Schwellen in der Zentralstation (1) und, bei nicht zufriedenstellendem Ergebnis des Vergleichs, Durchführung folgender zwei Schritte:
- Sendung der Adresse der Endstation (J) mit einem Befehl zur Änderung der Sendeleistung der Endstation (MC + IC [UD]) von der Zentralstation (1) aus, und

- als Antwort auf die Adresse (J) durch die entsprechende Endstation (2), Sendung eines Signals, das mit geänderter Sendeleistung gemäß besagtem Änderungsbefehl von der Endstation aus gesendet wird,

dadurch gekennzeichnet, daß

das von der Endstation (2) gesendete Signal, dessen erhaltene Leistung mit Schwellen verglichen wird, ein Referenzwort für Amplitude (MRA) ist, das Bits "1" aufweist, die am Anfang der Zyklen bei einer Anfangsleistung (INI) gesendet werden, und daß jeder Vergleich darin besteht,

- die Leistung jedes Bits in dem logischen Zustand "1" des in der Zentralstation (1) erhaltenen Referenzwortes für Amplitude (MRA) mit vorgegebenen unteren und oberen Schwellen (NI und NS) zu vergleichen,
- den Vergleich als zufriedenstellend zu erklären, wenn eine vorgegebene Zahl (N-1) von Bits "1" Leistungen zwischen den besagten zwei vorgegebenen Schwellen hat,
- einen ersten Befehl zu erzeugen, um die Sendeleistung der Endstation (2) zu inkrementieren (UD = "10"), wenn ein der Bits "1" des Referenzwortes (MRA) kleiner als besagte untere Leistung (NI) ist, und
- einen Befehl zu erzeugen, um die Sendeleistung der Endstation zu dekrementieren (UD = "01"), wenn ein der Bits "1" des Referenzwortes (MRA) größer als besagte obere Leistung (NS) ist.

2. Verfahren nach dem Anspruch 1, dadurch gekennzeichnet, daß jeder Vergleich außerdem darin besteht, einen zweiten Befehl zu erzeugen, um die Sendeleistung der Endstation (2) zu inkrementieren (UD = "11"), wenn ein der Bits "1" des Referenzwortes (MRA) kleiner als eine dritte Leistung (NF) ist, selbst deutlich kleiner als besagete untere Leistung (NI), wobei der zweite Befehl zu inkrementieren einer deutlich größeren Erhöhung der Sendeleistung der Endstation entspricht als der erste Befehl zu inkrementieren.

3. Verfahren nach irgendeinem der Ansprüche 1 und 2, dadurch gekennzeichnet, daß die Änderung der Sendeleistung in der Endstation (2) darin besteht, eine Berechnung (252) zu inkrementieren und dekrementieren in Antwort auf die jeweiligen von der Zentralstation (1) erzeugten Befehle zu inkrementieren und zu dekrementieren, der Berechnung (252) einen numerischen Amplitudenwert (253, PROM) entsprechen zu lassen, und einen Zwischenzähler (254) um den besagten Amplitudenwert zu dekrementieren, um eine Integrationsdauer eines Integrators zu definieren, der eine einem Sender (22) der Endstation entsprechende Amplitudenleistung erzeugt.

4. Verfahren nach den Ansprüchen 2 und 3, dadurch gekennzeichnet, daß die Berechnung als Antwort auf einen zweiten Befehl zu inkrementieren um einen deutlich größeren Wert steigt als als Antwort auf einen ersten Befehl zu inkrementieren.

5. Verfahren nach irgendeinem der Ansprüche 1 bis 4, gemäß welchem das Verbindungsnetzwerk in Wechselbetrieb funktioniert, die Adresse der Endstation (J) mit einem übertragungsbefehl (MC) in bezug auf das Referenzwort für Amplitude (MRA) oder mit einem Befehl zur Änderung der Sendeleistung der Endstation (MC + IC [UD]) am Anfang (GS) eines Rahmens in die Worwärtsrichtung liegt, und bei jeder Wechselphase (TA) ein numerischer Rahmen in die Vorwärtsrichtung (T12) von der Zentralstation (1) zu den Endstationen (2), und dann ein Rahmen in die Rückwärtsrichtung (21) von den Endstationen zur Zentralstation übertragen wird, wobei der Empfang des Anfangs eines Rahmens in Rückwärtsrichtung (T21) durch die Zentralstation (1) der Sendung des Endes des Rahmens in Vorwärtsrichtung nach einer vorgegebenen Phasenlaufzeit (TP) nachfolgt, das Referenzwort für die Amplitude (MRA) gleich nach dem Empfang des Endes des Rahmens in die Vorwärtsrichtung (T12) durch die Endstation gesendet wird.

6. Verfahren nach Anspruch 5, wenn dieser von Anspruch 3 oder 4 abhängt, dadurch gekennzeichnet, daß besagter Zwischenzähler (254) mehrmals nacheinander dekrementiert wird zwischen dem Empfang des Befehls, die Sendeleistung zu ändern (MC + IC [UD]), und dem Ende des Empfangs des Rahmens in die Vorwärtsrichtung (T12), in der Endstation (2).

## Claims

1. A process for adjusting the transmission level of terminal stations (2) disposed at various distances from a central station (1) by way of a communications network, the process comprising the cycle of following steps:

comparison of the received level of a signal transmitted by a terminal station with predetermined thresholds in the central station (1) and if the result of the comparison is unsatisfactory carrying out the following two steps:

transmission of the terminal station address (J) with an order to modify the transmission level of the terminal station (MC+IC[UD]) from the central station (1), and

transmission in response to the address (J) by the corresponding terminal station (2) of a signal at a transmission level modified in accordance with the modifying order from the terminal station, characterised in that

the signal transmitted by the terminal station (2) whose received level is compared with thresholds is an amplitude reference word (MRA) having 1-bits transmitted at an initial level (INI) at the start of the cycles, and

each comparison consists of:

comparing the level of each bit in the "1" logic state of the amplitude reference word (MRA) received at the central station (1) with predetermined low and high thresholds (NI and NS),

declaring the comparison satisfactory if a predetermined number (N-1) of 1-bits have levels between the said two predetermined thresholds;

preparing a first increase order (UD="10") for the transmission level of the terminal station (2) when one of the 1-bits of the reference word (MRA) is less than the low level (NI), and

preparing a decrease order (UD="01") for the transmission level of the terminal station when one of the 1-bits of the reference word (MRA) is greater than the high level (NS).

2. A process according to claim 1, characterised in that each comparison also comprises preparing a second increase order (UD="11") for the transmission level of the terminal (2) when one of the 1-bits of the reference word (MRA) is less than a third level (NF) which is itself appreciably less than the low level (NI), the second increase order corresponding to an appreciably greater increase in the transmission level of the terminal station than the first increase order.

3. A process according to claim 1 or 2, characterised in that the modification of the transmission level in the terminal station (2) comprises increasing and decreasing a count (252) in response to increase and decrease orders respectively prepared by the central station (1), making a digital amplitude value (253, PROM) correspond to the count (252) and decreasing a backwards counter (254) by the amplitude value to define an integration time of an integrator providing an amplitude level corresponding to a transmitter (22) of the terminal.

4. A process according to claims 2 and 3, characterised in that the count increases in response to a second increase order by an appreciably greater value than in response to a first increase order.

5. A process according to any of claims 1 to 4 wherein the communications network operates in the half-duplex mode;

at each half-duplex period (TA) an outgoing digital frame (T12) is transmitted from the central station (1) to the terminal stations (2) and then a return frame (T21) is transmitted from the terminal stations to the central station, the reception of the start of a return frame (T21) by the central station (1) following after the transmission of the end of an outgoing frame after a predetermined propagation time (TP), the address of the terminal station (J) with a transmission command (MC) relating to the amplitude reference word (MRA) or with an order to modify the transmission level of the terminal station (MC+IC[UD]) is disposed at the head (GS) of an outgoing frame, and

the amplitude reference word (MRA) is transmitted immediately after the reception of the end of the outgoing frame (T12) by the terminal station.

6. A process according to claim 5 when it is appended to claim 3 or 4, characterised in that the backwards counter (254) is decreased a number of times consecutively between the reception of an order to modify the transmission level (MC+IC[UD]) and the end of reception of an outgoing frame (T12) in the terminal station (2).

FIG.1

RESEAU
TELEPHONIQUE

STATION
CENTRALE
(FIG.6)

1

FO

$3_1$

$L_1$

TERMINAL $2_1$

TERMINAL $2_2$

TERMINAL $2_k$

$3_2$

RESEAU
ARBORESCENT DE
FIBRE OPTIQUE

$2_{K-1}$

TERMINAL

$3_K$

TERMINAL $2_K$

$L_0$

$L_K$

EP 0 465 300 B1

FIG. 2

FIG. 3

FIG. 4

## FIG.5

SR

INI $\left\{ \begin{array}{c} NS \\ NO \\ NI \end{array} \right.$

MRA

NF

sortie 171F

IF

TP

| T12 | | T21 |

FIG.6

EP 0 465 300 B1

FIG. 7

CODEUR

Vers 15

U

D

174

1741

1742

1744

1743

173S · 174S

173I

173F

172S

172I

172F

CL R

CL R

CL R

171S

171I

171F

NS

NI

NF

SR

de BT

TA

IF

HB

CIRCUIT D'ANALYSE DE MRA ET D'ELABORATION D'ORDRE DE REGLAGE D'AMPLITUDE 17

175

CIRCUIT DE COMMANDE DE REGISTRES

1754

1751

1752

1753

1751

S Q
R

COMPTEUR MODULO-N

CL

CO

*FIG. 8*

de 24

LED

fr

22

INTEGRATEUR 256

VS

259

255 S Q / R

DECOMPTEUR 10 BITS 254

CL

ED

PROM 253

L

COMPTEUR-DECOMPTEUR A 8 BITS 252

CL

EU

258

ED

257

233

232

E8

E1

BASE DE TEMPS 231

U

D

de 23

$2^x.FM$

$FM = 8/TA$

CIRCUIT DE REGLAGE D'AMPLITUDE 25